# FASCICULE DE BREVET EUROPEEN

(11) **EP 1 236 820 B1**
(45) Date de publication et mention de la délivrance du brevet: **25.05.2005**
(21) Numéro de dépôt: 02356023.8
(22) Date de dépôt: 12.02.2002
(51) Int. Cl.: D03D 15/00, D03D 15/02, B60P 7/04, G08B 13/22, H01B 7/00

(54) **Textile possédant des propriétés anti-lacération**
Zerreissfestes Gewebe
Anti-laceration fabric

(30) Priorité: 02.03.2001 FR 0102908
(43) Date de publication de la demande: 04.09.2002
(73) Titulaire: Tissage et Enduction Serge Ferrari SA, 38110 Saint Jean de Soudain (FR)
(72) Inventeur: Saiz, Carlos, 73000 Chambery (FR)
(74) Mandataire: Palix, Stéphane

(56) Documents cités:
- EP-A- 0 940 277
- DE-A- 2 441 054
- DE-A- 4 441 842
- FR-A- 2 736 880
- GB-A- 1 374 223
- GB-A- 2 317 363

## Description

### Domaine Technique

L'invention se rattache au domaine des textiles techniques et plus particulièrement des textiles possédant des caractéristiques mécaniques leur conférant des propriétés de résistance à la lacération ou de détection d'une tentative de lacération, appelées par la suite propriétés anti-lacération. L'invention trouve des applications toutes particulières dans le domaine des bâches en général, lorsque le textile est utilisé en association avec une toile enduite par exemple. Elle trouve également une application lorsque le textile est utilisé en tant que tel pour servir de bardage de bâtiments ou plus généralement de paroi verticale, de cloison, ou de séparation dans les constructions.

### Techniques antérieures

La nécessité de conférer des propriétés anti-lacération à des bâches, notamment de camions, a conduit à l'apparition de différentes solutions techniques.

Ainsi, on a déjà proposé de réaliser des bâches en complexant un textile avec un grillage métallique réalisé en feuillard gainé. Cette solution présente de multiples inconvénients et notamment le fait que, malgré l'emploi d'un grillage assez ouvert (avec un maillage typique de 100 mm x 100 mm) et comportant peu de matière métallique, ce grillage rigidifie très fortement la bâche, et la rend très difficile à manipuler lors du bâchage du camion. En outre, le grillage complexé apparaît généralement de l'extérieur de la bâche, ce qui signifie que la protection n'est pas réellement dissimulée, et laisse à penser que le camion est destiné à transporter des marchandises de valeur.

On a également proposé de réaliser des bâches de camion en réalisant l'enduction d'un textile composé soit entièrement de câbles métalliques, soit incorporant des câbles métalliques tissés avec d'autres câbles synthétiques. Ces solutions présentent également de nombreux inconvénients. En effet, quand le textile est composé en chaîne comme en trame de câbles suffisamment solides et suffisamment maillés pour résister à la lacération, le relief de l'armure est très important, ce qui conduit obligatoirement à déposer sur chaque face du textile métallique une grande quantité d'enduit pour, au minimum, couvrir la crête des fils. Un tel textile enduit est très lourd et pratiquement impossible à manipuler lors des opérations de bâchage du camion surtout lorsqu'il fait froid. Il est aussi relativement complexe à découper et à confectionner. Par ailleurs, les câbles métalliques de renforcement étant incorporés à l'intérieur même de la bâche, il est nécessaire de décliner une gamme entière de références différentes pour répondre aux souhaits d'épaisseur et de couleur des différents utilisateurs recherchant un équipement neuf. Pour le parc existant de camions bâchés, cette solution nécessite de remplacer entièrement les bâches en exploitation, même celles faiblement usagées. De plus, lorsqu'une lacération sectionnant les câbles apparaît, il est nécessaire de remplacer la paroi entière de la bâche, aucune réparation n'étant possible.

Sur le plan environnemental, ce type de construction textile rend très difficile le recyclage des matériaux du fait de la difficulté de séparer les câbles métalliques des matériaux synthétiques qui les enveloppent.

Enfin, il n'est généralement pas nécessaire de renforcer l'intégralité de la hauteur d'une bâche de camion, mais uniquement les parties accessibles. L'utilisation d'un textile présentant des câbles de renforcement métalliques sur toute la hauteur de la bâche, augmente inutilement le coût de cette dernière, et la rend malaisée à confectionner, comme déjà évoqué.

Il est également connu du GB 1 374 223 de réaliser un textile possédant des propriétés anti-lacération, réalisé à partir de câbles synthétiques gainés d'un matériau polymère tel que le polychlorure de vinyle.

Un problème que se propose donc de résoudre l'invention est celui du renforcement de bâches sans rendre les opérations de confection difficiles et complexes. Un autre problème que cherche à résoudre l'invention est celui de pouvoir conférer des propriétés anti-lacération à une grande diversité de textiles, notamment en ce qui concerne leurs caractéristiques mécaniques, leurs dimensions , leurs couleurs, et leurs marchés d'utilisation.

Le même besoin de propriétés anti-lacération existe pour des éléments similaires à des bâches que sont les bardages, et plus généralement les différents éléments de textile utilisés en architecture pour former des parois extérieures de tentes, des cloisons ou des revêtements. Dans ce cas, les éléments textiles peuvent être étanches comme le sont les bâches de camion, mais encore ajourés pour autoriser le passage de lumière ou conserver la visibilité au travers.

### Exposé de l'invention

L'invention concerne donc un textile technique possédant les propriétés anti-lacération.

Conformément à l'invention, un tel textile se caractérise en ce qu'il est réalisé à partir de câbles synthétiques gainés d'un matériau polymère tel que le polychlorure de vinyle, en ce qu'il comporte en chaîne et en trame des câbles métalliques gainés d'un matériau polymère de couleur différente de celle du d'un matériau polymère de gainage des câbles synthétiques, et en ce que les câbles métalliques de chaîne et de trame sont régulièrement espacés d'une distance inférieure à 80 millimètres.

Autrement dit, l'invention consiste à utiliser en tant que textile anti-lacération un textile réalisé à partir de câbles gainés parmi lesquels se trouvent certains câbles métalliques, qui définissent ainsi un maillage carré dont le côté est suffisamment petit pour interdire le passage de la main. De la sorte, la lacération réalisée avec un outil tranchant sera bloquée par les câbles métalliques, et les dimensions maximales sur lesquelles le textile peut être découpé seront insuffisantes pour laisser passer la main ou le bras du malfaiteur.

L'utilisation d'un matériau polymère d'une couleur différente pour les câbles synthétiques et les câbles de renforcement métalliques permet de localiser précisément ces câbles de renforcement et de les positionner donc de façon appropriée vis à vis de la zone à protéger.

Ce gainage de PVC peut être obtenu par extrusion ou par enduction. Ce gainage n'est bien entendu pas limité au PVC et pourrait être réalisé en polyéthylène (PE), en polypropylène (PP), en silicone ou autre matière synthétique possédant les propriétés ad hoc.

Avantageusement en pratique, les câbles métalliques peuvent être des câbles à base de fils d'acier au carbone, présentant une très bonne résistance à la rupture, typiquement supérieure à 50 kilogrammes par millimètre carré, et préférentiellement à 350 kg/mm².

Avantageusement en pratique, les câbles synthétiques utilisés peuvent être composés de fils de polyester, ou bien encore de fils de verre. L'emploi de fils de polyester confère une certaine résistance aux zones situées entre les câbles de renforcement métalliques, ainsi qu'une bonne compatibilité avec l'enduction en PVC.

Selon une autre caractéristique de l'invention, le textile peut comporter dans le sens chaîne ou trame des fils conducteurs d'électricité gainés d'un matériau polymère tel que du polychlorure de vinyle d'une couleur différente de celle du matériau polymère de gainage des câbles synthétiques et des câbles métalliques. Autrement dit, le tissu comprend des fils conducteurs également répartis régulièrement sur le tissu. Lorsque ces fils conducteurs sont coupés suite à une tentative de lacération, le circuit électrique dans lequel ces fils sont insérés est donc ouvert, ce qui permet donc de détecter la tentative de lacération et de la signaler. L'utilisation d'un fil conducteur gainé d'un PVC d'une couleur différente des autres fils facilite les opérations de connexion avec les dispositifs de contrôle.

En pratique, les fils conducteurs d'électricité peuvent être choisis dans le groupe comprenant les fils à base d'alliages de nickel et les fils d'acier inoxydables.

En pratique, les fils conducteurs d'électricité sont régulièrement espacés d'une distance inférieure à 300 millimètres et de préférence à 50 millimètres.

Dans une réalisation particulière, les câbles métalliques destinés à résister mécaniquement à la lacération peuvent également être utilisés pour leurs propriétés de conduction de l'électricité. Autrement dit, on utilise avantageusement comme conducteurs électriques les câbles métalliques destinés à résister à la lacération.

Dans une forme particulière, les fils conducteurs de l'électricité peuvent être reliés en série au niveau des lisières du textile, de manière à former une continuité électrique et un seul circuit électrique pour le textile. Les câbles métalliques résistants mécaniquement peuvent être reliés électriquement aux câbles conducteurs, pour être intégrés dans le circuit électrique de détection.

Avantageusement, le textile peut alors être associé à un dispositif de mesure de la résistance électrique des fils conducteurs, éventuellement associés aux câbles métalliques. Dès que cette résistance s'avère trop importante, car le courant parcourant les fils électriques devient nul suite à une lacération réussie, cela signifie qu'au moins un fil conducteur a été sectionné, et qu'une tentative de lacération a donc eu lieu.

Le textile conforme à l'invention peut être utilisé soit seul, soit par incorporation dans un complexe textile dont il constitue l'une des couches. Dans ce dernier cas, il peut être avantageusement associé à un textile enduit pour former une bâche par exemple de camion, qui est renforcée uniquement dans la zone où la couche caractéristique est présente. Il est ainsi possible de ne renforcer que la partie basse d'une bâche de camion et de laisser la partie haute de la bâche exempte de couche de protection, et donc plus lègère.

Il est également possible d'utiliser le textile conforme à l'invention sous la forme de ruban, ou de bandes de relativement faible largeur pour former des sangles résistantes à la lacération. Dans ce cas, ces bandes peuvent être disposées dans des endroits appropriés du complexe textile pour assurer une protection localisée de la bâche.

### Description sommaire des figures

La manière de réaliser l'invention ainsi que les avantages qui en découlent ressortiront bien de la description du mode de réalisation qui suit, à l'appui des figures annexées dans lesquelles :
La figure 1 est une vue schématique d'un textile réalisé conformément à l'invention, associé à un dispositif de détection d'ouverture de boucle.
La figure 2 est une vue en perspective sommaire de l'intérieur d'une remorque de camion équipée d'une bâche intégrant le textile conforme à l'invention, selon deux modes de réalisation différents.

### Manière de réaliser l'invention

Comme déjà évoqué, l'invention concerne un textile possédant des propriétés anti-lacération, qui peut être utilisé soit seul, soit en association avec un autre textile pour former notamment des bâches et en particulier des bâches de camion.

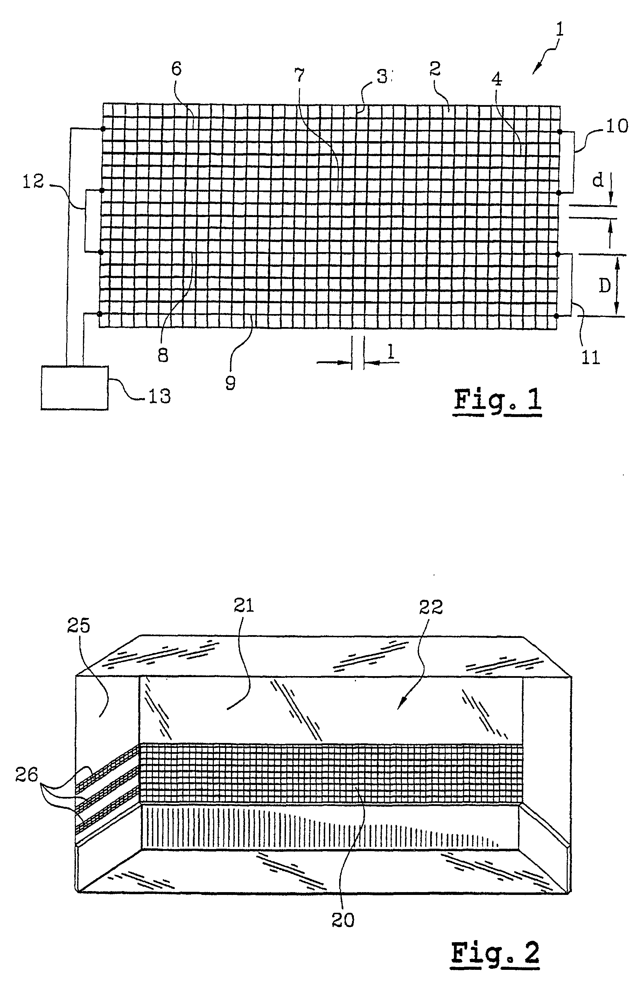

Un exemple particulier d'un tel textile est décrit à la figure 1. Un tel textile (1) comprend dans son sens chaîne des câbles (2) de polyester gainés de PVC et des câbles métalliques (3) également gainés de PVC.

Plus précisément, et dans un exemple de réalisation particulier, les câbles sont constitués de fils de polyester haute ténacité 1100 dtex. Ces câbles sont gainés d'une gaine de PVC classique.

Les câbles métalliques (3) utilisés sont constitués des fils à base d'acier au carbone, du type de ceux utilisés dans les carcasses radiales de pneumatiques. Ces câbles d'acier possèdent une résistance à la rupture supérieure à 350 kilos par millimètre carré. Ces câbles métalliques sont gainés de PVC. Comme déjà évoqué, les couleurs du PVC de gainage des câbles de polyester et des câbles métalliques sont différentes pour visualiser leur position, et faciliter les opérations de confection et de réalisation de boucles électriques.

Dans le sens chaîne, le textile possède 10 câbles de chaîne par centimètre et les câbles métalliques sont disposés soit seuls, soit par groupes de deux ou davantage pour assurer des résistances croissantes à la lacération. Les câbles métalliques sont distants les uns des autres d'une distance ℓ valant 45 millimètres.

Dans le sens trame, le textile conforme à l'invention comprend des câbles de polyester gainés (2), identiques à ceux utilisés pour les câbles de chaîne. Il comprend également des câbles métalliques gainés (4) identiques à ceux (3) utilisés pour les câbles de chaîne. Dans le sens trame, le textile comprend 10 câbles de polyester par centimètre. Les câbles métalliques sont disposés soit seuls, soit par groupes de deux ou davantage pour assurer des résistances croissantes à la lacération. Les câbles métalliques sont séparés d'une distance d, également égale à 45 millimètres. Ceci permet de définir un maillage carré de 45 millimètres de côté, suffisamment étroit pour empêcher le passage d'une main.

Conformément à une autre caractéristique de l'invention, le textile comprend également dans le sens trame des fils (6-9) conducteurs de l'électricité, qui sont avantageusement des fils en alliages de nickel ou en cuivre vernis. Ces fils conducteurs (6-9) sont répartis dans le sens trame, et sont distants d'une distance D de l'ordre de 45 millimètres. Dans une forme non illustrée, les distances d et D peuvent être égales, de sorte que les câbles métalliques résistants et les fils conducteurs d'alarme sont alternés.

Dans une réalisation particulière, on peut utiliser avantageusement en trame comme conducteurs électriques les câbles métalliques destinés à résister à la lacération.

Bien entendu, les valeurs données ci-avant ne le sont qu'à titre d'exemple, et l'invention ne saurait être limitée à ce seul exemple particulier. Elle couvre au contraire différentes variantes en ce qui concerne la composition des câbles métalliques des fils conducteurs et des câbles synthétiques utilisés entre les câbles métalliques.

Selon une autre caractéristique de l'invention, et comme illustré à la figure 1, les fils conducteurs de l'électricité (6-9) peuvent être reliés en série par des portions conductrices (10-12) situées en lisières du tissu. De la sorte, l'ensemble des fils conducteurs (6-9) forment un circuit qui peut être connecté à un dispositif de mesure (13). Ce dispositif de mesure peut par exemple comparer la résistance du circuit (6-9) qui lui est connecté, et déclencher une action lorsque cette résistance passe au-dessus d'un seuil prédéterminé signifiant que le circuit a été coupé, et qu'une lacération a donc été opérée. Ce dispositif peut être relié à d'autres organes de contrôle et de commande, et notamment des alarmes et/ou des dispositifs de signalement.

Le textile illustré à la figure 1 peut être utilisé en tant que tel, puisque l'ensemble des composants y compris les câbles métalliques sont gainés de PVC, et sont donc résistants à la corosion. Ils n'exposent pas non plus l'utilisateur à un risque électrique, puisque les différents fils conducteurs sont également gainés, et que les tensions employées sont dans la catégorie "très basse tension".

Comme déjà évoqué, ce textile peut également être utilisé en association avec une autre couche, pour former un complexe. Ce complexe peut inclure une nappe textile occupant toute la largeur ou une largeur partielle du complexe, comme illustré à la figure 2. Dans ce cas, le textile (20) conforme à l'invention peut être associé à une bâche (21) formée d'un textile enduit. Ce complexage peut être obtenu par différentes méthodes connues, et notamment par thermosoudure ou par collage.

Dans la forme illustrée à la figure 2, seule la partie basse de la bâche (22) est protégée contre les attaques de vandalisme, mais l'intégralité de la hauteur de la bâche peut évidemment être équipée du textile renfort caractéristique de l'invention.

Sur une face de la bâche illustrée à la figure 2, la bâche comprend des rubans ou des bandes (26) réalisées à partir du textile conforme à l'invention. Ces bandes (26) possèdent une largeur comprise entre 5 et 40 centimètres. Ces rubans ou bandes sont obtenus par découpe d'une plus grande largeur d'un même textile ou d'un textile plus dense conforme à l'invention.

La largeur de ces rubans (26) est supérieure au pas séparant les câbles métalliques (3, 4), pour conférer les propriétés anti-lacération caractéristiques. Dans le cas où le tissu inclut des fils conducteurs (6-9), cette largeur minimale est supérieure au pas séparant deux fils conducteurs.

Bien que cela ne soit pas représenté, les différents textiles conformes à l'invention situés sur les bâches illustrées à la figure 2 peuvent être reliés à des dispositifs de détection tels qu'illustrés à la figure 1.

Il ressort de ce qui précède que le textile conforme à l'invention permet de conférer des propriétés anti-lacération à des bâches ou plus généralement des textiles existants, grâce à un complexage qui peut être localisé et optimisé. Les bâches ainsi réalisées possèdent d'une part, les propriétés esthétiques liées à la réalisation des bâches en tant que telles, auxquelles sont ajoutées les propriétés anti-lacération conférées par le renfort réalisé en textile caractéristique de l'invention.

### Applications industrielles

Le textile conforme à l'invention peut être utilisé dans de multiples applications. On peut citer à titre d'exemple la réalisation de bâches de camions, en association avec d'autres textiles étanches. Le textile conforme à l'invention peut également être utilisé en tant que bardage ou plus généralement en tant qu'élément d'architecture comme parois verticales cloisons qui doivent résister à des tentatives de lacération.

On peut citer à titre d'exemple les cloisons utilisées dans des zones d'aéroport pour délimiter les frontières administratives, tout en autorisant le passage de la lumière et la visibilité au travers de la cloison.

## Revendications

1. Textile (1) possédant des propriétés anti-lacération, réalisé à partir de câbles synthétiques (2) gainés d'un matériau polymère tel que le polychlorure de vinyle, **caractérisé en ce qu'**il comporte en chaîne et en trame des câbles métalliques (3, 4) gainés d'un matériau polymère d'une couleur différente de celle du matériau polymère de gainage des fils synthétiques, et **en ce que** les câbles métalliques (3, 4) de chaîne et de trame sont régulièrement espacés d'une distance (d, ℓ) inférieure à 80millimètres.

2. Textile selon la revendication 1, **caractérisé en ce que** les câbles métalliques sont constitués de fils à base d'acier au carbone, et **en ce que** les câbles synthétiques sont constitués de fils en polyester.

3. Textile selon la revendication 1, **caractérisé en ce qu'**il comporte dans le sens chaîne ou trame, des fils conducteurs de l'électricité (6-9) gainés d'un matériau polymère tel que du polychlorure de vinyle d'une couleur différente de celle du matériau polymère de gainage des câbles synthétiques.

4. Textile selon la revendication 3, **caractérisé en ce que** les fils conducteurs de l'électricité sont choisis dans le groupe comprenant les fils à base d'alliage de nickel, les fils d'acier inoxydable.

5. Textile selon la revendication 3, **caractérisé en ce que** les fils conducteurs de l'électricité sont régulièrement espacés d'une distance (D) inférieure à 50 millimètres.

6. Textile selon la revendication 3, **caractérisé en ce que** les fils (6-9) conducteurs de l'électricité et/ou les câbles métalliques (3,4) sont reliés en série au niveau des lisières du textile.

7. Textile selon la revendication 6, **caractérisé en ce qu'**il est associé à un dispositif (13) de mesure de la résistance électrique des fils conducteurs de l'électricité et/ou des câbles métalliques (3,4) reliés en série.

8. Textile selon l'une des revendications précédentes, **caractérisé en ce qu'**il se présente sous la forme d'un ruban.

9. Complexe textile comprenant une couche constituée par un textile selon l'une des revendications précédentes.

10. Utilisation du textile selon l'une des revendications 1 à 8 en tant que bardage.

11. Utilisation du complexe selon la revendication 9 en tant que bâche ou renfort de bâche.

## Patentansprüche

1. Textilmaterial (1), welches Reißfestigkeits-Eigenschaften besitzt und aus synthetischen Korden (2) hergestellt ist, die mit einem polymeren Material wie Polyvinylchlorid ummantelt sind, **dadurch gekennzeichnet, daß** es in der Kette und im Schuß Metallkorde (3, 4) umfaßt, die mit einem polymeren Material mit einer von der des polymeren Materials zur Ummantelung der synthetischen Fäden unterschiedlichen Farbe ummantelt sind, und daß die Metallkorde (3, 4) der Kette und des Schusses gleichmäßig um einen Abstand (d, *l*) von weniger als 80 Millimeter voneinander beabstandet sind.

2. Textilmaterial nach Anspruch 1, **dadurch gekennzeichnet, daß** die Metallkorde aus Fäden aus Kohlenstoffstahl gebildet sind und daß die synthetischen Korde aus Polyesterfäden gebildet sind.

3. Textilmaterial nach Anspruch 1, **dadurch gekennzeichnet, daß** es in Kett- oder Schußrichtung elektrisch leitende Fäden (6-9) umfaßt, welche mit einem polymeren Material wie Polyvinylchlorid mit einer von der des polymeren Materials zur Ummantelung der synthetischen Korde unterschiedlichen Farbe ummantelt sind.

4. Textilmaterial nach Anspruch 3, **dadurch gekennzeichnet, daß** die elektrisch leitenden Fäden aus der Gruppe ausgewählt sind, welche Fäden aus einer Nickellegierung, Fäden aus nichtrostendem Stahl umfaßt.

5. Textilmaterial nach Anspruch 3, **dadurch gekennzeichnet, daß** die elektrisch leitenden Fäden gleichmäßig um einen Abstand (D) von weniger als 50 Millimeter voneinander beabstandet sind.

6. Textilmaterial nach Anspruch 3, **dadurch gekennzeichnet, daß** die elektrisch leitenden Fäden (3, 4) und/oder die Metallkorde (3, 4) im Bereich der Kanten des Textilmaterials in Reihe miteinander verbunden sind.

7. Textilmaterial nach Anspruch 6, **dadurch gekennzeichnet, daß** es mit einer Vorrichtung (13) zur Messung des elektrischen Widerstandes der elektrisch leitenden Fäden und/oder der in Reihe verbundenen Metallkorde (3, 4) verbunden ist.

8. Textilmaterial nach einem der vorangehenden Ansprüche, **dadurch gekennzeichnet, daß** es die Form eines Bandes aufweist.

9. Textilkomplex, welcher eine von einem Textilmaterial nach einem der vorangehenden Ansprüche gebildete Schicht umfaßt.

10. Verwendung des Textilmaterials nach einem der Ansprüche 1 bis 8 als Verkleidung.

11. Verwendung des Komplexes nach Anspruch 9 als Plane oder Planenverstärkung.

## Claims

1. A textile (1) possessing antilaceration properties, which is made from synthetic cables (2) sheathed with a polymer material, such as polyvinyl chloride, **characterized in that** it includes, in the warp direction and the weft direction, metal cables (3, 4) sheathed with a polymer material having a different color from that of the polymer material for sheathing the synthetic yarns, and that the warp and weft metal cables (3, 4) are uniformly spaced by a distance of (d, *1*) of less than 80 millimeters.

2. The textile as claimed in claim 1, wherein the metal cables consist of wires based on carbon steel and wherein the synthetic cables consist of polyester yarns.

3. The textile as claimed in claim 1, which includes, in the warp or weft direction, electrically conducting yarns (6-9) sheathed with a polymer material, such as polyvinyl chloride, having a color different from that of the polymer material for sheathing the synthetic cables.

4. The textile as claimed in claim 3, wherein the electrically conducting yarns are selected from the group comprising wires based on a nickel alloy and stainless steel wires.

5. The textile as claimed in claim 3, wherein the electrically conducting yarns are uniformly spaced by a distance (D) of less than 50 millimeters.

6. The textile as claimed in claim 3, wherein the electrically conducting yarns (6-9) and/or the metal cables (3, 4) are connected in series along the selvedges of the textile.

7. The textile as claimed in claim, 6, which is associated with a device (13) for measuring the electrical resistance of the electrically conducting yarns and/or of the metal cables (3, 4) connected in series.

8. The textile as claimed in one of the preceding claims, which is in the form of a tape.

9. A textile complex which includes a ply consisting of a textile as claimed in one of the preceding claims.

10. The use of the textile as claimed in one of claims 1 to 8 as cladding.

11. The use of the complex as claimed in claim 9 as a tarpaulin or tarpaulin reinforcement.
